# EUROPÄISCHE PATENTSCHRIFT

(11) **EP 1 610 939 B1**
(45) Veröffentlichungstag und Bekanntmachung des Hinweises auf die Patenterteilung: **12.03.2008**
(21) Anmeldenummer: 04724006.4
(22) Anmeldetag: 29.03.2004
(51) Int. Cl.: B29C 47/22, B29C 47/92

(54) **VERFAHREN ZUM BLASFORMEN VON HOHLKORPERN AUS THERMOPLASTISCHEM KUNSTSTOFF**
METHOD FOR BLOW MOULDING HOLLOW BODIES MADE OF A THERMOPLASTIC SYNTHETIC MATERIAL
PROCEDE POUR MOULER PAR SOUFFLAGE DES CORPS CREUX EN MATIERE THERMOPLASTIQUE

(30) Priorität: 28.03.2003 DE 10314401; 26.06.2003 DE 10328655
(43) Veröffentlichungstag der Anmeldung: 04.01.2006
(60) Teilanmeldung: 06010657.2
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald
(86) Internationale Anmeldenummer: PCT/EP2004/003309
(87) Internationale Veröffentlichungsnummer: WO 2004/085132

(56) Entgegenhaltungen:
- DE-A- 4 432 735
- FR-A- 2 299 957
- US-A- 3 771 931
- US-A- 3 795 719
- US-A- 4 218 416
- US-A- 4 993 582
- US-A- 5 102 588
- US-A- 5 110 519
- US-A1- 2001 019 186
- PATENT ABSTRACTS OF JAPAN Bd. 1995, Nr. 01, 28. Februar 1995 (1995-02-28) -& JP 06 293061 A (UBE IND LTD), 21. Oktober 1994 (1994-10-21) -& DATABASE WPI Week 199502 Derwent Publications Ltd., London, GB; AN 1995-009311 XP002302184 -& JP 06 293061 A 21. Oktober 1994 (1994-10-21)
- PATENT ABSTRACTS OF JAPAN Bd. 007, Nr. 187 (M-236), 16. August 1983 (1983-08-16) -& JP 58 087026 A (ISHIKAWAJIMA HARIMA JUKOGYO KK), 24. Mai 1983 (1983-05-24) -& DATABASE WPI Week 198326 Derwent Publications Ltd., London, GB; AN 1983-62866K XP002302185 -& JP 58 087026 A 24. Mai 1983 (1983-05-24)
- PATENT ABSTRACTS OF JAPAN Bd. 015, Nr. 232 (M-1124), 13. Juni 1991 (1991-06-13) -& JP 03 071821 A (YOSHINO KOGYOSHO CO LTD), 27. März 1991 (1991-03-27) -& DATABASE WPI Week 199119 Derwent Publications Ltd., London, GB; AN 1991-135783 XP002302188 -& JP 03 071821 A 27. März 1991 (1991-03-27)
- PATENT ABSTRACTS OF JAPAN Bd. 017, Nr. 198 (M-1398), 19. April 1993 (1993-04-19) -& JP 04 344220 A (UBE IND LTD), 30. November 1992 (1992-11-30) -& DATABASE WPI Week 199302 Derwent Publications Ltd., London, GB; AN 1993-014881 XP002302189 -& JP 04 344220 A 30. November 1992 (1992-11-30)
- PATENT ABSTRACTS OF JAPAN Bd. 017, Nr. 155 (M-1388), 26. März 1993 (1993-03-26) -& JP 04 323019 A (UBE IND LTD), 12. November 1992 (1992-11-12) -& DATABASE WPI Week 199252 Derwent Publications Ltd., London, GB; AN 1992-427825 XP002302186 -& JP 04 323019 A 12. November 1992 (1992-11-12)
- PATENT ABSTRACTS OF JAPAN Bd. 014, Nr. 228 (M-0973), 15. Mai 1990 (1990-05-15) -& JP 02 057317 A (MAZDA MOTOR CORP), 27. Februar 1990 (1990-02-27) -& DATABASE WPI Week 199014 Derwent Publications Ltd., London, GB; AN 1990-104968 XP002302187 -& JP 02 057317 A 27. Februar 1990 (1990-02-27)

## Beschreibung

Die Erfindung betrifft ein Verfahren zum Blasformen von Hohlkörpern aus thermoplastischem Kunststoff, bei dem schlauchförmige Vorformlinge aus Kunststoffschmelze durch eine Ringspaltdüse einer Düse/Dorneinheit nach unten ins Freie extrudiert und in einer Blasform zu Hohlkörpern aufgeweitet werden,
wobei die aus der Ringspaltdüse austretenden Vorformlinge schwellen, durch ihr Eigengewicht auslängen sowie durch ein viskoelastisches Verhalten der Schmelze relaxieren,
wobei die Spaltbreite der Ringspaltdüse während eines Vorformlingsaustritts von einem mit der Vorformlingsbildung ablaufenden Programm gesteuert wird, so dass der Vorformling ein sich in Längsrichtung änderndes Wandstärkenprofil erhält, und
wobei die Extrusionsgeschwindigkeit und/oder die Spaltbreite der Ringspaltdüse so korrigiert werden, dass der Vorformling in der Blasform eine vorgegebene Position einnimmt.

Der aus dem Düsenspalt austretende Vorformling ist frei formbar inneren und äußeren Kräften ausgesetzt. Aufgrund des viskoelastischen Verhaltens der Kunststoffschmelze kann sich die Materialverteilung und der Durchmesser im Vorformling ändern, beispielsweise durch Schwankungen der Schmelzetemperatur, des Kunststoffmaterials, der Extrusionszeit, auf die Schmelze wirkenden Scherbeanspruchungen und dergleichen. Ferner resultieren aus Phänomenen, die als Schwellen, Auslängen und Relaxieren bezeichnet werden, viskoelastische Verformungen, die sich auf die äußeren und inneren Abmessungen des Vorformlings auswirken. Mit Schwellen bezeichnet man den Effekt, dass der Durchmesser und die Wandstärke des aus dem Strangpresskopf austretenden Vorformlings sich in Folge einer Rückorientierung der im Fließkanal ausgerichteten Moleküle ändert. Das Ausmaß des Schwellens ist von unterschiedlichen Faktoren abhängig, z. B. dem Grad der im Fließkanal eingebrachten Orientierungen und eines Rückerinnerungsvermögens des Materials. Durch das Phänomen des Relaxierens nimmt der Vorformlings nach Beendigung der Vorformlingsextrusion wieder in seiner Länge ab. Die Längenabnahme entsteht in erster Linie durch eine Rückbildung der im Fließkanal eingebrachten Orientierungen. Die beim Phänomen des Relaxierens einflussnehmende Größe ist insbesondere die Zeit, die zum Abbau der Orientierungen zur Verfügung steht. Die Verkürzung durch Relaxieren ist verbunden mit einer Zunahme der Wandstärke sowie einer Durchmessererweiterung des Vorformlings. Der Effekt des Relaxierens ist über der Vorformlingslänge lokal unterschiedlich, da später extrudierten Bereichen weniger Zeit zur Rückbildung der Orientierungen bleibt. Auslängung tritt in Folge des Eigengewichtes des Vorformlings auf. Unter dem mit der Extrusion zunehmenden Gewicht des Vorformlings verringern sich Durchmesser und Wandstärke des Vorformlings unterhalb des Kopfaustritts. Die Auslängung wird von der Vorformlingsunterkante beginnend mit zunehmender Masse des aus dem Strangpresskopf austretenden Vorformlings größer. Die beobachtete Austrittsgeschwindigkeit des Vorformlings nimmt dabei zu. Die beschriebenen viskoelastischen Effekte stehen in einer komplexen Wechselwirkung. Mit längerer Extrusionszeit und höherer Massetemperatur wird die Auslängung größer. Mit der Zunahme der in einem Vorformlingsabschnitt herrschenden Auslängung nimmt der lokale Vorformlingsdurchmesser und die Vorformlingswanddicke ab. Der am Düsenaustritt vorliegende Vorformlingsdurchmesser nimmt mit dem an ihm hängenden Vorformlingsgewicht ab. Andererseits nimmt die Schwellung zu bei einer Reduzierung des Düsenspaltes und bei einer Vergrößerung der Extrusionsgeschwindigkeit. Insbesondere bei längerer Extrusionszeit wirken sich die Phänomene der Relaxation aus. Die beschriebenen Phänomene sind seit langem bekannt und beispielsweise in S. Bätz, "Blasformen-Einflußgrößen bei der Vorformlingsbildung mit Bezug auf die Wanddickensteuerung", Diplomarbeit an der Fachhochschule Darmstadt, Fachbereich Kunststofftechnik, 1. Juni 1993, beschrieben.

Ein Verfahren mit den eingangs beschriebenen Merkmalen ist aus EP-A 1 004 423 bekannt. Die Extrusionsgeschwindigkeit und/oder die Spaltbreite der Ringspaltdüse werden so korrigiert, dass der Vorformling in der Blasform eine vorgegebene Position einnimmt. Hierdurch wird sichergestellt, dass sich die viskoelastischen Effekte nicht störend auf die Lage des Vorformlings in der Blasform auswirken. Dem optimalen Durchmesser des schlauchförmigen Vorformlings wird bei laufender Hohlkörperfertigung keine Beachtung geschenkt. Es bleibt unberücksichtigt, dass der Durchmesser des Vorformlings sich auf die Qualität des Blasformergebnisses auswirkt. So beeinflusst der Durchmesser des Vorformlings beispielsweise den Reckgrad bei der Aufweitung des Vorformlings in der Blasform. Es wird hingenommen, dass die Breite der oberen Quetschnaht im Vergleich zu einem Vorgabewert häufig zu klein oder die Breite der unteren Quetschnaht zu groß ausfällt. Die Einhaltung eines definierten Durchmessers ist insbesondere angezeigt, wenn der Vorformling in der Blasform zu komplizierten Behälterformen aufgeweitet wird.

Der Erfindung liegt die Aufgabe zugrunde, das eingangs beschriebene Verfahren so weiter auszubilden, dass der Vorformling in der Blasform nicht nur eine vorgegebene Lage einnimmt, sondern seinen Durchmesser bzw. seine Quetschnahtlänge verändert und an Vorgaben angepasst werden kann. Die Vorgaben können sowohl definierte Aufweitungen als auch definierte Einschnürungen des Vorformlings betreffen. Die Veränderung soll ohne Betriebsunterbrechung, also bei laufender Hohlkörperfertigung, möglich sein.

Diese Aufgabe wird bei einem Verfahren nach Anspruch 1 gelöst.

Hierdurch kann unter anderem sichergestellt werden, dass sowohl die Breite der oberen als auch der unteren Quetschnaht des Vorformlings zu der Blasform einem Vorgabewert entspricht. Ferner ist die Durchmesservergrößerung vorteilhaft beim Einführen von Einlegeteilen in den Vorformling.

Das erfindungsgemäße Verfahren hat besondere Vorteile bei einer kontinuierlichen Vorformlingsproduktion. Es ist jedoch auch für einen diskontinuierlichen Ausstoßbetrieb, bei dem Vorformlinge absatzweise hergestellt werden, geeignet. Das Verfahren kann auch zur Reduzierung von Rüstzeiten während eines Produktwechsels genutzt werden. Bei Anlagen, bei denen einer Düse/Dorneinheit zwei oder mehr Blasformen zugeordnet sind, die wechselweise mit einem aus der Düse/Dorneinheit austretenden Vorformling beschickt werden, ermöglicht es das erfindungsgemäße Verfahren ferner, in die parallel betriebenen Blasformen Vorformlinge mit unterschiedlichen Durchmessern einzubringen, die zu unterschiedlichen Hohlkörpern aufgeweitet werden. Auf diese Weise können mit einer einzigen Düse/Dorneinheit unterschiedliche Hohlkörper nebeneinander gefertigt werden.

Eine bevorzugte Ausführung sieht vor, dass eine Düse/Dorneinheit mit axial und/oder radial verstellbaren Elementen verwendet und mit Stellbewegungen dieser Elemente der Austrittsdurchmesser der Ringspaltdüse verändert wird. Sofern axial verstellbare Elemente eingesetzt werden, so besitzen diese die Form einer Hülse, welche die Wirkung des Dorns oder des den Dorn umgebenden Düsenringes verlängert oder verkürzt. Radial verstellbare Elemente bestehen aus Segmenten, die sich stets zu einer ringförmigen Einheit ergänzen. Ferner kann eine Düse/Dorneinheit mit mindestens einem elastisch dehnbaren Einsatz verwendet werden, durch dessen Dehnung der Austrittsdurchmesser der Ringspaltdüse verändert wird.

Der Durchmesser des schlauchförmigen Vorformlings kann verändert werden, indem durch gezielte Maßnahmen die Schwellung des Vorformlings beeinflusst wird. Hierzu bieten sich eine Mehrzahl von Maßnahmen an. Sehr wirksam ist die Verwendung einer Düse/Dorneinheit mit mindestens zwei, am Düsenaustritt oder im Düseninnern mit unterschiedlichen Austrittswinkeln zusammengeführten konzentrischen Fließkanälen, wobei die Strömungsaufteilung auf die Fließkanäle verändert und hierdurch die Schwellung des Vorformlings beeinflusst wird. Ferner können der Düse/Dorneinheit mindestens zwei Massespeicher für die Kunststoffschmelze zugeordnet werden, die einzeln durchströmbar sind und sich in Bezug auf ihren Speicherdurchmesser unterscheiden. Die Massespeicher können an einen gemeinsamen Extruder angeschlossen sein. Im Rahmen der Erfindung liegt es auch, jedem Massespeicher einen eigenen Extruder zuzordnen. Mit der Wahl des Strömungsweges wird die Schwellung des Vorformlings ebenfalls beeinflusst. Eine weitere Möglichkeit, um die Schwellung des Vorformlings bei einer kontinuierlichen Vorformlingsextrusion zu verändern, ist die Steuerung der Austrittsgeschwindigkeit der Schmelze aus der Ringspaltdüse. Eine praktikable Lösung zur Veränderung der Austrittsgeschwindigkeit besteht darin, dass die Schmelze unter Verwendung eines kontinuierlich betriebenen Schneckenextruders der Düse/Dorneinheit zugeführt wird und dass dem Förderstrom der Schnecke ein zusätzlicher Schmelzestrom durch Bewegung eines Schubkolbens überlagert wird. Schließlich besteht noch die Möglichkeit, eine Düse/Dorneinheit mit mindestens einem axial verstellbaren, als Hülse ausgebildeten Schieber zu verwenden, der auf einen von der Schmelze durchströmten Fließkanal einwirkt und einen veränderbaren Drosselspalt vor dem Düsenaustritt bildet. Durch Verstellung des Drosselspaltes kann ebenfalls die Schwellung des Vorformlings beeinflusst werden.

Im Rahmen der erfindungsgemäßen Lehre besteht ferner die Möglichkeit, den Durchmesser der schlauchförmigen Vorformlinge dadurch gezielt zu beeinflussen, dass auf die Auslängung des Vorformlings oder die Relaxation Einfluss genommen wird. Es ergeben sich im Rahmen der erfindungsgemäßen Lehre eine Mehrzahl von Möglichkeiten, um dies zu verwirklichen. Gemäß einer bevorzugten Ausführung wird die Unterkante des Vorformlings während der Vorformlingsextrusion abgestützt und hierdurch das wirksame Eigengewicht des Vorformlings verändert. Die Abwärtsbewegung kann geregelt werden. Gemäß einer weiteren Ausgestaltung der erfindungsgemäßen Lehre wird der aus der Ringspaltdüse austretende Vorformling mit einem gasförmigen Medium gekühlt, wobei die Gasmenge und/oder Gastemperatur während der Vorformlingsextrusion gesteuert wird. Auch hierdurch kann die Auslängung des Vorformlings beeinflusst werden. Ebenso ist es möglich, den Vorformling vorwiegend im zuerst ausgestoßenen Bereich zu erwärmen. Schließlich besteht die Möglichkeit, die Auslängung des Vorformlings durch Änderung der Schmelzetemperatur zu steuern.

Sofern mehrschichtige Hohlkörper gefertigt werden, kann bei einer Extrusion des entsprechend mehrschichtig ausgebildeten Vorformlings das Verhältnis der Schichtdicken gesteuert werden, um die Auslängung des Vorformlings zu verändern.

Um den Durchmesser des Vorformlings während der Vorformlingsextrusion zu verändern, können Vorrichtungen verwendet werden, die mit dem Vorformling nach unten bewegt werden. Es ergeben sich zahlreiche Möglichkeiten für die Ausgestaltung von solchen Vorrichtungen. Die Vorrichtung kann eine tellerförmige Auflagefläche aufweisen, die das offene Ende des Vorformlings während der Vorformlingsextrusion abstützt und hierdurch das wirksame Eigengewicht des Vorformlings verändert. Eine andere Ausgestaltung sieht vor, dass das offene Ende des Vorformlings während der Vorformlingsextrusion auf einen Konus aufläuft und durch außenseitig gegen den Konus bewegte Verschlusselemente gegen den Konus zumindest teilweise abgedichtet wird. Die aus dem Konus und den Verschlusselementen gebildete Vorrichtung wird mit dem Vorformling nach unten bewegt, wobei die Abwärtsbewegung gegebenenfalls auch geregelt werden kann. Durch eine Abwärtsbewegung, die größer ist als die Extrusionsgeschwindigkeit, kann der Vorformlingsdurchmesser gezielt reduziert werden. Es besteht die weitere Möglichkeit, in den durch den Konus verschlossenen Innenraum ein gasförmiges Medium einzublasen, um den Durchmesser des Vorformlings zu verändern. Im Rahmen der Erfindung liegt es ferner, an den Vorformling während der Vorformlingsextrusion eine Vakuumkammer anzulegen, die auch im Kontakt mit dem Vorformling nach unten bewegt werden kann. Schließlich besteht die Möglichkeit, den Vorformling über eine Spreizvorrichtung zu führen, die unterhalb des Strangpresskopfes in einem Raum zwischen dem Strangpresskopf und der Blasform angeordnet ist und auf die Innenfläche des Vorformlings wirkende gesteuerte Spreizbewegungen ausführt. Die Spreizvorrichtung wird vorzugsweise zum Ende eines Vorformlingsausstosses betätigt. Im Rahmen der Erfindung liegt es, dass die Spreizvorrichtung stationär angeordnet ist oder in Ausstoßrichtung gesteuerte Bewegungen ausführt oder nach Berühren mit dem Vorformling nach unten bewegt wird. Gemäß einer weiteren Ausgestaltung der Erfindung weist die Spreizvorrichtung einen in Ausstoßrichtung bewegbaren Spreizkopf auf, der im Kontakt mit dem Vorformling gesteuerte Bewegungen in Ausstoßrichtung ausführt. Der Spreizkopf kann mit dem Vorformling bis in die geöffnete Blasform hineinbewegt werden. Vor dem Schließen der Blasform werden Spreizelemente des Spreizkopfes eingefahren und der Spreizkopf innerhalb des Vorformlings bis in den Bereich oberhalb der Blasform zurückgezogen. Bei allen beschriebenen Ausführungen besteht die Möglichkeit, die Bewegung der Vorrichtung zu regeln. Die Spreizvorrichtung kann während des Ausstoßes eines Vorformlings mehrfach betätigt werden, um mehrere Abschnitte des Vorformlings aufzuweiten.

Es zeigen schematisch:
- **Fig. 1**: eine Blasformanlage zum Herstellen von Hohlkörpern aus thermoplastischem Kunststoff,
- **Fig. 2 bis 11**: Zusatzeinrichtungen der in Fig. 1 dargestellten Blasformanlage in verschiedenen Ausgestaltungen.

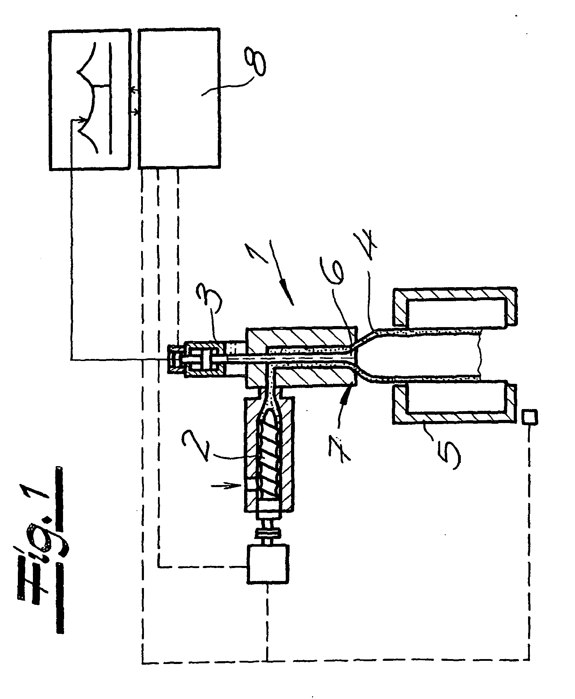

Zum grundsätzlichen Aufbau der in Fig. 1 dargestellten Blasformanlage gehören ein Strangpresskopf 1, eine Vorrichtung 2 zur Förderung einer Kunststoffschmelze durch den Strangpresskopf, eine programmgesteuerte Stelleinrichtung 3 zur Steuerung des Düsenspaltes während der Extrusion eines Vorformlings 4 sowie eine unterhalb des Strangpresskopfes 1 angeordnete Blasform 5 zum Aufweiten eines mit einem offenen Vorformlingsende aus dem Düsenspalt austretenden schlauchförmigen Vorformlings 4 zu einem Hohlkörper. Der Strangpresskopf 1 weist eine Düse/Dorneinheit 6 mit einem ringförmigen Düsenspalt, der im Folgenden als Ringspaltdüse 7 bezeichnet wird, auf. Ferner ist eine Regelung 8 vorgesehen, welche die Extrusionsgeschwindigkeit und/oder die Ringspaltdüse so korrigiert, dass der Vorformling 4 in der Blasform 5 eine vorgegebene Position einnimmt. Geeignete Regelverfahren sind in EP-A 0 345 474 und EP-A 0 776 752 beschrieben.

Es ist bekannt, dass die aus der Ringspaltdüse austretenden Vorformlinge 4 schwellen, durch ihr Eigengewicht auslängen sowie durch ein viskoelastisches Verhalten der Schmelze relaxieren. Durch im Folgenden näher beschriebenen Zusatzeinrichtungen 10 wird der Durchmesser der Vorformlinge durch Verstellen des Austrittsdurchmessers der Ringspaltdüse oder durch Betätigung einer Vorrichtung, die stationär angeordnet ist oder in Ausstoßrichtung gesteuerte Bewegungen ausführt oder im Kontakt mit dem Vorformling nach unten bewegt wird, oder durch Beeinflussen des Schwellens, durch Einwirken auf die Auslängung oder Relaxation oder durch eine Kombination dieser Maßnahmen während der Extrusion eines Vorformlings verändert. Das Verfahren ist sowohl für eine kontinuierliche Vorformlingsextrusion als auch für einen Ausstoßbetrieb geeignet.

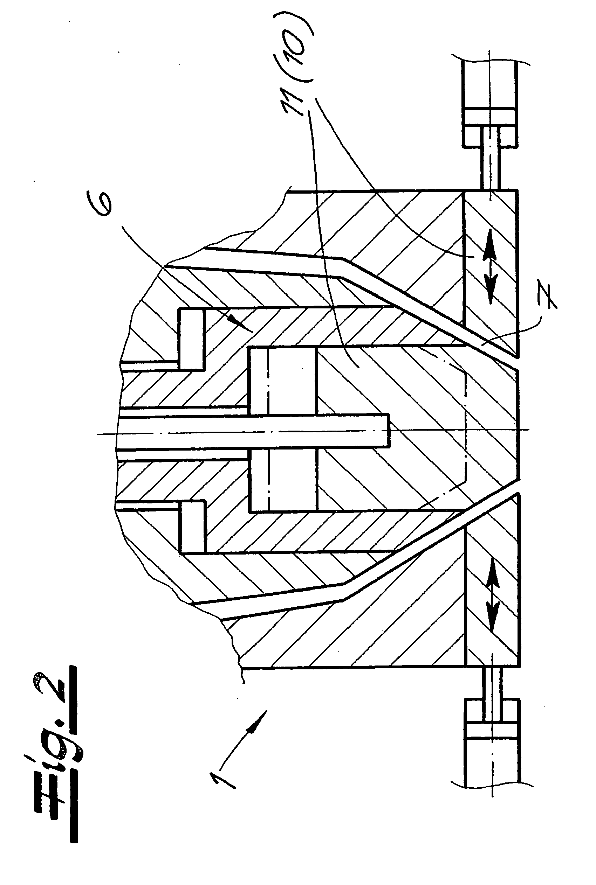

Die in Fig. 2 dargestellte Düse/Dorneinheit 6 weist als Zusatzeinrichtung 10 mindestens ein verstellbares Element 11 auf, durch dessen Stellbewegung der Austrittsdurchmesser der Ringspaltdüse 7 veränderbar ist. Das Element 11 kann als hülsenförmiger, axial verstellbarer Schieber ausgebildet sein. Dieser Kann auch aus Segmenten bestehen, die unabhängig voneinander axial verstellbar sind. Das Element 11 kann ferner als als horizontal verstellbare Segmente ausgebildet sein. Schließlich besteht die Möglichkeit, das radial verstellbare Element 11 in Form einer Blende auszuführen, die radial verstellbare Segmente - ähnlich einer Fotoblende - enthält.

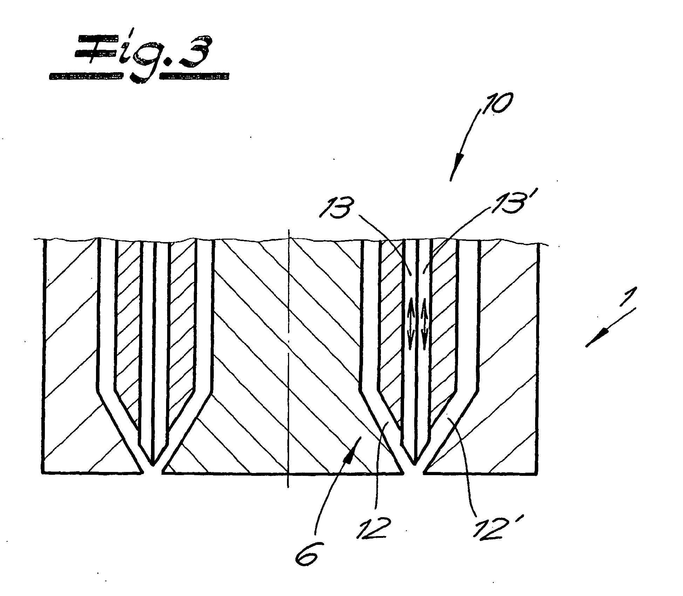

Die in Fig. 3 dargestellte Düse/Dorneinheit weist als Zusatzeinrichtung 10 mindestens zwei am Düsenaustritt oder im Düseninnern mit unterschiedlichen Austrittswinkeln zusammengeführte konzentrische Fließkanäle 12, 12' auf. In der Düse/Dorneinheit 6 sind Schieber 13, 13' vorgesehen, um die Strömungsaufteilung auf die Fließkanäle 12, 12' zu verändern. Die Fließkanäle 12, 12' können von einem Extruder beschickt werden. Im Rahmen der Erfindung liegt es auch, jedem der Fließkanäle 12, 12' einen eigenen Extruder zuzuordnen. Der Austrittswinkel bzw. eine Orientierung durch Richtungsänderung im Kopf wirkt sich auf die Schwellung des Vorformlings aus.

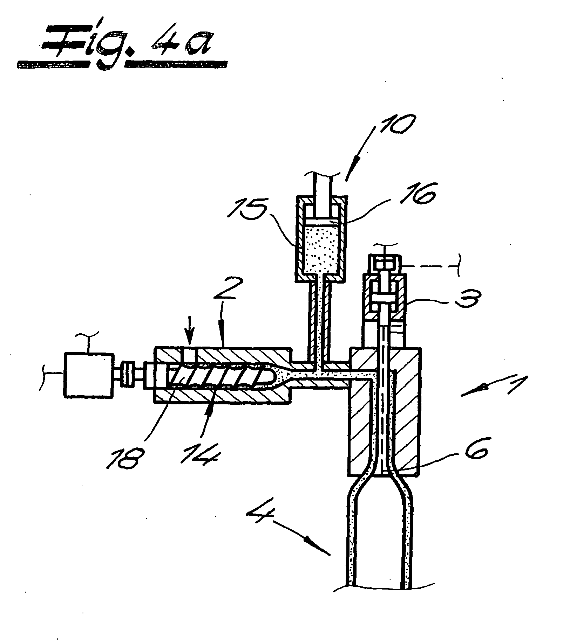

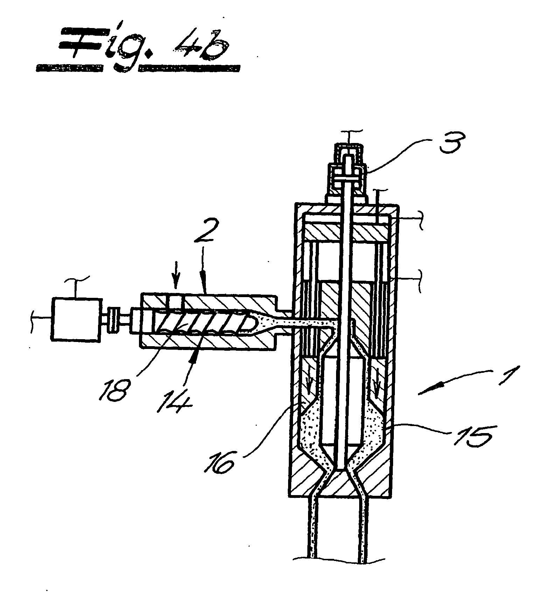

Die Fördervorrichtung 2 der Blasformanlage kann wahlweise für einen Ausstoßbetrieb oder einen kontinuierlichen Betrieb eingerichtet sein. Bei den in Fig. 4a und 4b dargestellten Ausführungen wird eine Kombination dieser Möglichkeiten realisiert. Die Vorrichtung 2 zur Förderung der Kunststoffschmelze weist im Ausführungsbeispiel der Fig. 4a einen Schneckenextruder 14 und als Zusatzeinrichtung 10 einen Massespeicher 15 mit einem Kolben 16 auf, wobei durch eine Kolbenbewegung der Massedurchsatz durch den Strangpresskopf 1 veränderbar ist. Dem Förderstrom der Schnecke 18 wird ein zusätzlicher Schmelzestrom durch Bewegung des Kolbens 16 überlagert. Hierdurch wird die Austrittsgeschwindigkeit der Schmelze aus der Ringspaltdüse 7 verändert, was sich auf die Schwellung des Vorformlings auswirkt. Der Massespeicher 15 kann ferner in dem Strangpresskopf 1 integriert sein, wie dies in Fig. 4b dargestellt ist. Auch der in Fig. 4b dargestellte Strangpresskopf wird für eine kontinuierliche Vorformlingsproduktion verwendet. Durch überlagerte Stellbewegungen eines integrierten Kolbens 16 ist der Massedurchsatz und damit die Schwellung veränderbar.

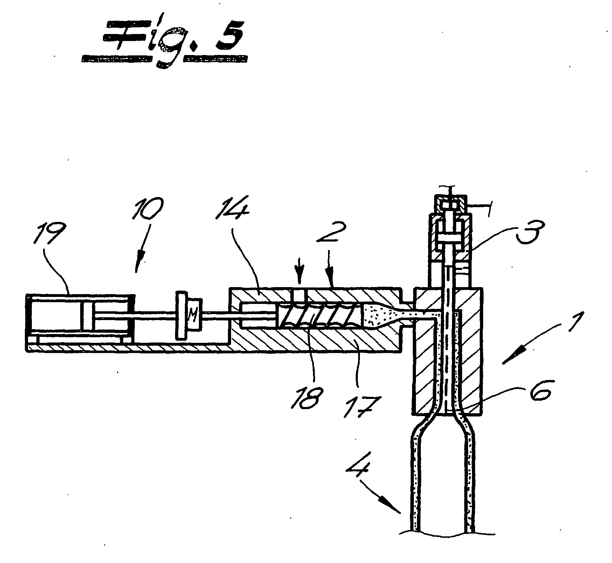

Im Ausführungsbeispiel der Fig. 5 weist die Vorrichtung 2 zur Förderung der Kunststoffschmelze einen Schneckenextruder 14 mit einem Extrudergehäuse 17 als Massespeicher und einer Schnecke 18 als Förderorgan auf. Die Schnecke 18 oder ein die Schnecke 18 umgebender Plastifizierzylinder ist ohne Unterbrechung des Fördervorgangs als Kolben linear innerhalb des Extrudergehäuses 17 bewegbar. Als Zusatzeinrichtung 10 ist ein Stellantrieb 19 für lineare Stellbewegungen der Schnecke 18 bzw. des Plastifizierzylinders innerhalb des Extrudergehäuses 17 vorgesehen. Auch bei dieser Ausführung kann die Austrittsgeschwindigkeit und dadurch die Schwellung des Vorformlings verändert werden.

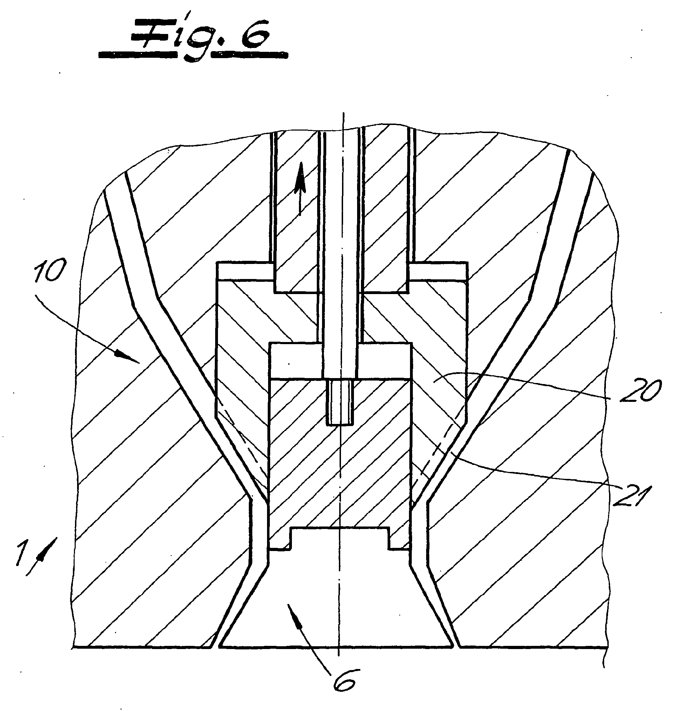

Bei einer in Fig. 6 dargestellten Ausgestaltung weist die Düse/Dorneinheit 6 als Zusatzeinrichtung 10 einen axial verstellbaren Schieber 20 auf, der als Hülse ausgebildet ist und innerhalb eines von der Schmelze durchströmten Fließkanals einen veränderbaren Drosselspalt 21 bildet. Im Drosselspalt 21 werden Eigenspannungen in der Schmelze je nach Spaltgröße aufgebaut oder abgebaut. Auch dies wirkt sich auf das Schwellen des Vorformlings aus.

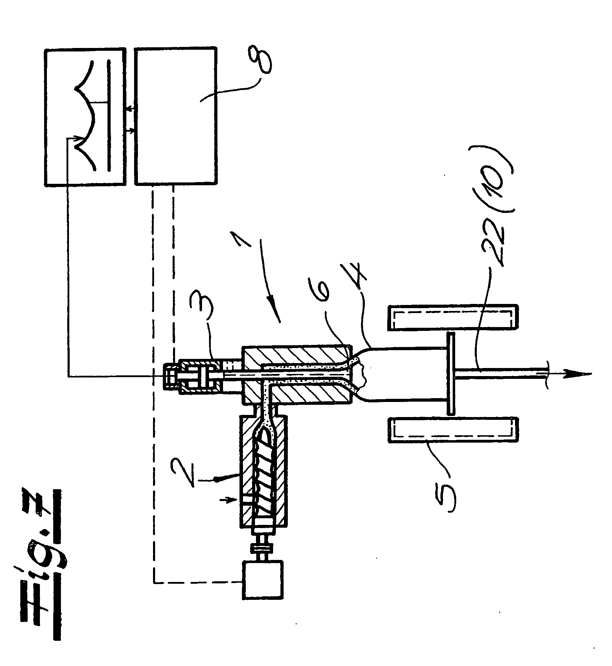

In den Ausführungsbeispielen der Fig. 7 bis 9 sind als Zusatzeinrichtung 10 Vorrichtungen 22 beschrieben, die im Kontakt mit dem Vorformling 4 nach unten bewegbar sind.

Im Ausführungsbeispiel der Fig. 7 ist die Vorrichtung 22 tellerförmig ausgebildet und stützt die Unterkante des aus der Ringspaltdüse 7 austretenden Vorformlings 4 während der Vorformlingsextrusion. Die Abwärtsbewegung der mit dem Vorformling 4 in Eingriff stehenden Vorrichtung 22 wird vorzugsweise geregelt. Durch die Vorrichtung 22 wird das wirksame Eigenwicht des Vorformlings 4 während des Extrusionsvorganges verändert und das Auslängen des Vorformlings beeinflusst. Die Beeinflussung der Auslängung wirkt sich auf den Durchmesser des Vorformlings 4 aus. Ferner kann der Vorformling mit der in Fig. 7 beschriebenen Vorrichtung in eine genaue Lage zur Blasform gebracht werden. Bevor die Blasform 5 schließt, wird die Zusatzeinrichtung 10 aus dem Schließbereich der Blasform entfernt.

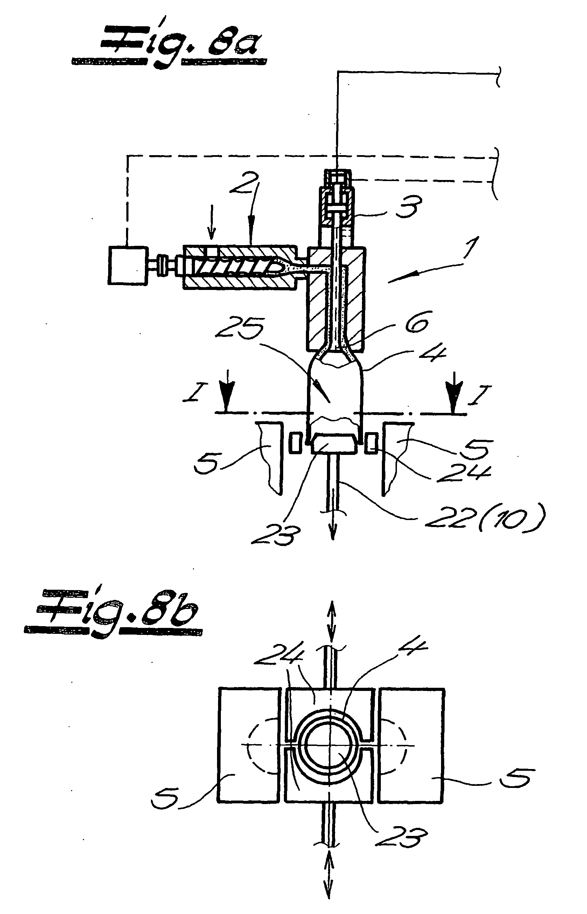

Im Ausführungsbeispiel der Fig. 8a ist als Zusatzeinrichtung 10 ebenfalls eine Vorrichtung 22 vorgesehen, die im Kontakt mit dem Vorformling nach unten bewegbar ist. Sie weist einen Konus 23 sowie gegen den Konus verstellbare Verschlusselemente 24 auf. Die Verschlusselemente 24 sind in der Fig. 8b dargestellt, welche den Schnitt I-I aus Fig. 8a zeigt. Die Verschlusselemente 24 sind als Klemmbacken ausgebildet und außenseitig gegen den Konus verstellbar. Während der Vorformlingsextrusion läuft das offene Ende des Vorformlings auf den Konus 23 auf. Durch Betätigung der Verschlusselemente 24 wird das Vorformlingsende gegen den Konus 23 abgedichtet. Sobald das Ende des Vorformlings mit der beschriebenen Vorrichtung in Kontakt getreten ist, wird diese mit einer vorgegebenen konstanten oder sich ändernden Geschwindigkeit nach unten bewegt. Durch eine Blaseinrichtung 25, die an die Vorrichtung 22 oder an den Strangpresskopf 1 angeschlossen ist, kann ein gasförmiges Medium in den Innenraum des Vorformlings eingeleitet werden, um den Durchmesser des Vorformlings zu verändern. Auch mit der in den Fig. 8a und 8b dargestellten Vorrichtung kann der Vorformling in eine genaue Lage zur Blasform gebracht werden. Bevor die Blasform 5 schließt, wird die Vorrichtung 22 aus dem Schließbereich der Blasform entfernt.

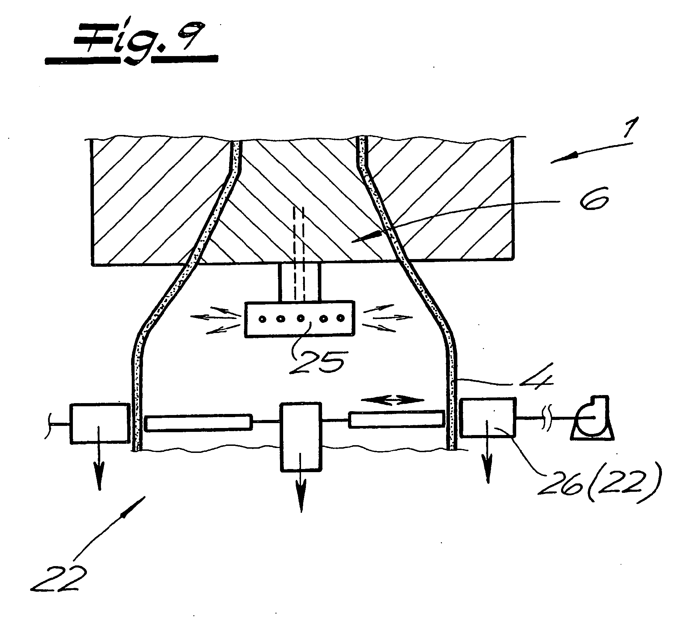

Fig. 9 zeigt ebenfalls Vorrichtungen 22, die im Kontakt mit dem Vorformling nach unten bewegbar sind. Die Vorrichtung 22 kann als Vakuumkammer 26 ausgebildet werden, welche den Vorformling umgibt. Ferner besteht die Möglichkeit, die Vorrichtung 22 als mechanische Spreizvorrichtung auszubilden. Ferner ist im Ausführungsbeispiel der Fig. 9 eine Blaseinrichtung 25 vorgesehen, die ortsfest installiert werden kann. Schließlich besteht die Möglichkeit, dass die Vorrichtung 22 eine auf die Außenseite des Vorformlings wirkende, radial verstellbare Kontaktfläche aufweist.

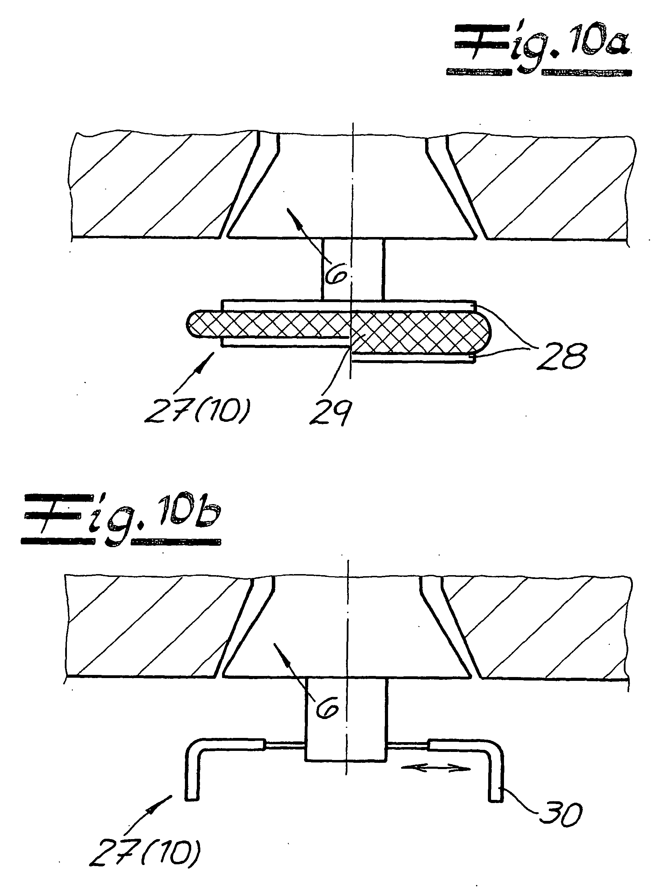

Im Ausführungsbeispiel der Fig. 10a ist die Zusatzeinrichtung 10 als mechanische Spreizvorrichtung 27 ausgebildet. Sie ist stationär angeordnet, wobei jedoch der Abstand zur Düse/Dorneinheit 6 verstellbar sein kann. Die Spreizvorrichtung 27 weist im Ausführungsbeispiel einen zwischen zwei Backen 28 eingespannten elastischen Einsatz 29 auf, der sich bei einer Stellbewegung der Backen verformt und dadurch seinen Durchmesser ändert.

Die Fig. 10b zeigt eine Spreizvorrichtung 27, mit horizontal verstellbaren Segmenten 30. Die Stellbewegung der Segmente 30 erfolgt vorzugsweise in Längsrichtung der Quetschnaht, die beim Schließen der Blasform an dem Vorformling gebildet wird. Durch die Spreizeinrichtung ist die Länge der Quetschnaht gezielt veränderbar.

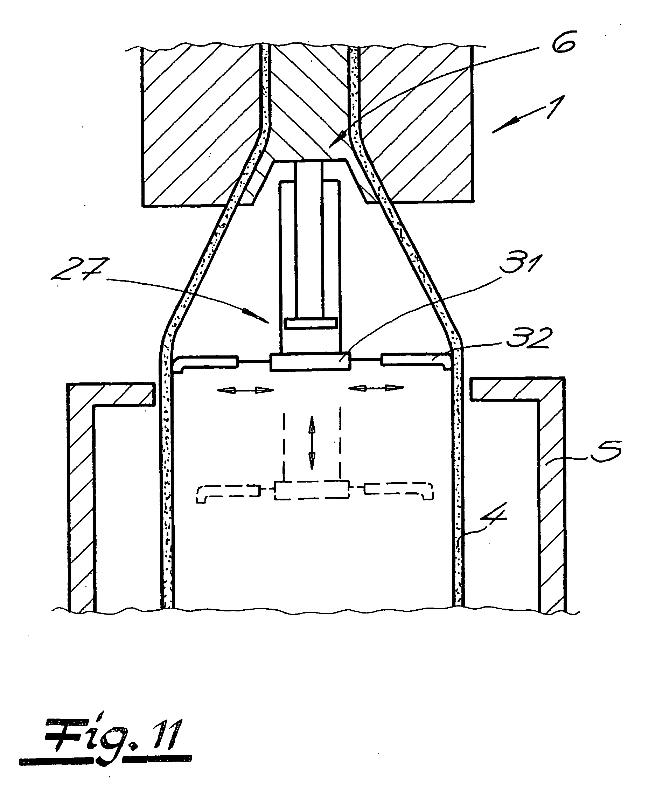

Die in den Fig. 9, 10a und 10b dargestellten Spreizvorrichtungen 27 sind jeweils unterhalb des Strangpresskopfes 1 in einem Raum zwischen dem Strangpresskopf und der Blasform 5 angeordnet und wirken auf die Innenfläche des Vorformlings 4. In den Ausführungsbeispielen der Fig. 10a und 10b sind die Spreizvorrichtungen stationär angeordnet. Im Rahmen der Erfindung liegt es jedoch auch, dass die Spreizvorrichtungen 27 in Ausstoßrichtung gesteuerte Bewegungen ausführen. Dies wird im Folgenden anhand der Fig. 11 erläutert. Die in Fig. 11 dargestellte Spreizvorrichtung 27 weist einen in Ausstoßrichtung bewegbaren Spreizkopf 31 auf, der im Kontakt mit dem Vorformling 4 gesteuerte Bewegungen in Ausstoßrichtung ausführt. Der Darstellung in Fig. 11 entnimmt man, dass der Spreizkopf 31 mit dem Vorformling 4 bis in die geöffnete Blasform 5 hinein bewegbar ist. Vor dem Schließen der Blasform 5 werden Spreizelemente 32 eingefahren sowie der Spreizkopf 31 innerhalb des Vorformlings bis in den Bereich oberhalb der Blasform 5 zurückgezogen.

Die Spreizvorrichtungen 27 werden vorzugsweise zum Ende eines Vorformlingsausstosses betätigt und wirken auf das obere Ende des Vorformlings.

Alle vorstehend anhand von Ausführungsbeispielen erläuterten Maßnahmen können einzeln oder in beliebigen Kombinationen verwirklicht werden. Die erfindungsgemäßen und anhand von Ausführungsbeispielen beschriebenen Vorrichtungen ermöglichen Änderungen des Vorformlingdurchmessers ohne Betriebsunterbrechung, also bei laufender Hohlkörperfertigung. Bei einer Produktumstellung kann mit Hilfe der Vorrichtung der Vorformlingsdurchmesser so verändert und angepasst werden, dass in vielen Fällen ein Austausch der Düse/Dorneinheit nicht mehr erforderlich ist. Dadurch können Rüstzeiten während eines Produktwechsels beachtlich reduziert werden. Bei Anlagen, bei denen einer Düse/Dorneinheit zwei oder mehr Blasformen zugeordnet sind, die wechselweise mit einem aus der Düse/Dorneinheit austretenden Vorformling beschickt werden, können mit Hilfe des erfindungsgemäßen Verfahrens bzw. einer erfindungsgemäß ausgebildeten Vorrichtung in die parallel betriebenen Blasformen Vorformlinge mit unterschiedlichem Durchmesser eingebracht werden, die zu unterschiedlichen Hohlkörpern aufgeweitet werden. Auf diese Weise ist es möglich, mit einer einzigen Düse/Dorneinheit unterschiedliche Produkte zeitgleich zu fertigen.

## Patentansprüche

1. Verfahren zum Blasformen von Hohlkörpern aus thermoplastischem Kunststoff, bei dem schlauchförmige Vorformlinge (4) aus Kunststoffschmelze durch eine Ringspaltdüse einer Düse/Dorneinheit (6,7) nach unten ins Freie extrudiert und in einer Blasform (5) zu Hohlkörpern aufgeweitet werden,
wobei die aus der Ringspaltdüse austretenden Vorformlinge schwellen, durch ihr Eigengewicht auslängen sowie durch ein viskoelastisches Verhalten der Schmelze relaxieren,
wobei die Spaltbreite der Ringspaltdüse während eines Vorformlingsaustritts von einem mit der Vorformlingsbildung ablaufenden Programm gesteuert wird, so dass der Vorformling ein sich in Längsrichtung änderndes Wandstärkenprofil erhält, und
wobei die Extrusionsgeschwindigkeit und/oder die Spaltbreite der Ringspaltdüse so korrigiert werden, dass der Vorformling in der Blasform eine vorgegebene Position einnimmt,
**dadurch gekennzeichnet, dass** als zusätzliche Maßnahme der Durchmesser der Vorformlinge durch Verstellung des Durchmessers der Ringspaltdüse und/oder durch Maßnahmen, die das Schwellen verändern, so eingestellt wird, dass die Breite der durch das Schließen der Blasform gebildeten oberen und unteren Quetschnähte Vorgabewerten entsprechen.

2. Verfahren nach Anspruch 1, **dadurch gekennzeichnet, dass** eine Düse/ Dorneinheit mit axial oder radial verstellbaren Elementen verwendet und mit Stellbewegungen dieser Elemente der Durchmesser der Ringspaltdüse verändert wird.

3. Verfahren nach Anspruch 1, **dadurch gekennzeichnet, dass** eine Düse/ Dorneinheit mit mindestens einem elastisch dehnbaren Einsatz verwendet und durch Dehnung des Einsatzes der Durchmesser der Ringspaltdüse verändert wird.

4. Verfahren nach Anspruch 1, **dadurch gekennzeichnet, dass** eine Düse/ Dorneinheit mit mindestens zwei, am Düsenaustritt oder im Düseninnern mit unterschiedlichen Austrittswinkeln zusammengeführten konzentrischen Fließkanälen verwendet wird, wobei die Strömungsaufteilung auf die Fließkanäle verändert und hierdurch die Schwellung des Vorformlings beeinflusst wird.

5. Verfahren nach Anspruch 1, **dadurch gekennzeichnet, dass** der Düse/ Dorneinheit mindestens zwei Massespeicher für die Kunststoffschmelze zugeordnet sind, die einzeln durchströmbar sind und sich in Bezug auf ihren Speicherdurchmesser unterscheiden, wobei mit der Wahl des Strömungsweges die Schwellung des Vorformlings beeinflusst wird.

6. Verfahren nach Anspruch 1, **dadurch gekennzeichnet, dass** die Schmelze unter Verwendung eines kontinuierlich betriebenen Schneckenextruders der Düse/Dorneinheit zugeführt wird und dass dem Förderstrom der Schnecke ein zusätzlicher Schmelzestrom durch Bewegung eines Schubkolbens überlagert wird, um die Austrittsgeschwindigkeit der Schmelze aus der Ringspaltdüse zu verändern und hierdurch die Schwellung des Vorformlings zu beeinflussen..

7. Verfahren nach Anspruch 1, **dadurch gekennzeichnet, dass** eine Düse/ Dorneinheit mit mindestens einem axial verstellbaren, als Hülse ausgebildeten Schieber verwendet wird, wobei der Schieber auf einen von der Schmelze durchströmten Fließkanal einwirkt und einen veränderbaren Drosselspalt vor dem Düsenaustritt bildet und wobei durch Verstellung des Drosselspaltes die Schwellung des Vorformlings beeinflusst wird.

8. Verfahren nach Anspruch 1, **dadurch gekennzeichnet, dass** an den Vorformling während der Vorformlingsextrusion eine Vakuumkammer angelegt wird, um den Durchmesser des Vorformlings zu vergrößern.

9. Verfahren nach Anspruch 1, **dadurch gekennzeichnet, dass** der aus der Ringspaltdüse austretende Vorformling mit gasförmigen Medien gekühlt oder erwärmt wird, wobei die Gasmenge und/oder Gastemperatur während der Vorformlingsextrusion gesteuert und hierbei zusätzlich eine Auslängung des Vorformlings beeinflusst wird.

10. Verfahren nach Anspruch 1, **dadurch gekennzeichnet**, zusätzlich eine Auslängung des Vorformlings durch Änderung der Schmelzetemperatur gesteuert wird.

## Claims

1. A method for blow moulding hollow bodies of a thermoplastic synthetic material, wherein tubular preforms (4) of plastic melt are extruded downwards out into the open through an annular gap nozzle of a nozzle/gudgeon unit (6, 7) and are expanded in a blow mould (5) to form hollow bodies,
wherein the preforms exiting from the annular gap nozzle swell, are elongated by their own weight and are relaxed by viscoelastic behaviour of the melt,
wherein the gap width of the annular gap nozzle during a preform exit is controlled by a program running with the formation of the preform so that the preform acquires a wall thickness profile which varies in the longitudinal direction and
wherein the extrusion speed and/or the gap width of the annular gap nozzle are corrected so that the preform occupies a predetermined position in the blow mould,
**characterised in that** as an additional measure, the diameter of the preforms can be adjusted by adjusting the exit diameter of the annular gap nozzle and/or by measures which change the swelling so that the width of the upper and lower pinch-off seams formed by closing the blow mould correspond to specified values.

2. The method according to claim 1, **characterised in that** a nozzle/gudgeon unit having axially or radially adjustable elements is used and the diameter of the annular gap nozzle is varied by adjusting movements of these elements.

3. The method according to claim 1, **characterised in that** a nozzle/gudgeon unit having at least one elastically expandable insert is used and the diameter of the annular gap nozzle is varied by expansion of the insert.

4. The method according to claim 1, **characterised in that** a nozzle/gudgeon unit is used, comprising at least two concentric flow channels which are brought together at the nozzle outlet or in the interior of the nozzle with different outlet angles, wherein the flow division over the flow channels is varied and the swelling of the preform is hereby influenced.

5. The method according to claim 1, **characterised in that** the nozzle/gudgeon unit has at least two bulk storage devices for the plastic melt, through which flow can take place individually and which differ in respect to their storage diameter, wherein the swelling of the perform is influenced by the choice of the flow path.

6. The method according to claim 1, **characterised in that** the melt is fed to the nozzle/gudgeon unit using a continuously operated screw extruder and that an additional melt flow is superposed on the conveying flow of the screw by movement of a thrust piston to vary the exit velocity of the melt from the annular gap nozzle and thereby influence the swelling of the preform.

7. The method according to claim 1, **characterised in that** a nozzle/gudgeon unit has at least one axially adjustable slider, configured as a sleeve,
wherein the slider acts on a flow channel through which the melt flows and forms a variable throttle gap before the nozzle outlet and wherein the swelling of the preform is influenced by adjusting the throttle gap.

8. The method according to claim 1, **characterised in that** a vacuum chamber is applied to the preform during extrusion of the preform to enlarge the diameter of the preform.

9. The method according to claim 1, **characterised in that** the preform emerging from the annular gap nozzle is cooled or heated with gaseous media, wherein the quantity of gas and/or the gas temperature is controlled during extrusion of the preform and an elongation of the preform is additionally influenced hereby.

10. The method according to claim 1, **characterised in that** an elongation of the preform is additionally controlled by varying the melting point.

## Revendications

1. Procédé de soufflage de corps creux en matière thermoplastique, dans lequel des ébauches de forme tubulaire (4) en coulée de matière plastique sont extrudées vers le bas à l'air libre à travers une buse à fente annulaire d'une unité buse/mandrin (6, 7) et élargies en corps creux dans un moule de soufflage (5),
dans lequel les ébauches sortant de la buse à fente annulaire gonflent, s'allongent sous leur propre poids et se relâchent du fait d'une caractéristique de viscosité élastique de la coulée,
dans lequel la largeur de fente de la buse à fente annulaire est contrôlée pendant la sortie d'une ébauche par un programme démarrant avec la formation de l'ébauche de manière à ce que l'ébauche acquière un profil d'épaisseur de paroi variable dans le sens longitudinal et
dans lequel la vitesse d'extrusion et/ou la largeur de fente de la buse à fente annulaire sont corrigées de manière à ce que l'ébauche prenne une position prescrite dans le moule de soufflage,
**caractérisé en ce que**, en tant que mesure supplémentaire, le diamètre des ébauches est réglé par réglage du diamètre de la buse à fente annulaire et/ou par des mesures modifiant le gonflement de manière à ce que la largeur de la soudure par écrasement supérieure et inférieure formée par la fermeture du moule de soufflage corresponde à des valeurs prescrites.

2. Procédé selon la revendication 1, **caractérisé en ce qu'**on emploie une unité buse/mandrin à éléments réglables axialement ou radialement et que, par des mouvements de réglage de ces éléments, on modifie le diamètre de la buse à fente annulaire.

3. Procédé selon la revendication 1, **caractérisé en ce qu'**on emploie une unité buse/mandrin comportant au moins une garniture extensible élastiquement et que, par étirement de la garniture, on modifie le diamètre de la buse à fente annulaire.

4. Procédé selon la revendication 1, **caractérisé en ce qu'**on emploie une unité buse/mandrin comportant au moins deux canaux d'écoulement concentriques à angles de sortie différents rassemblés à la sortie de la buse ou à l'intérieur de la buse, la répartition de l'écoulement entre les canaux d'écoulement étant modifiée et ceci influant sur le gonflement de l'ébauche.

5. Procédé selon la revendication 1, **caractérisé en ce qu'**à l'unité buse/mandrin sont associés au moins deux accumulateurs de masse pour la coulée de matière plastique qui peuvent être parcourus individuellement et qui se distinguent au niveau de leur diamètre d'accumulation, le gonflement de l'ébauche étant influencé par le choix de la voie d'écoulement.

6. Procédé selon la revendication 1, **caractérisé en ce que** la coulée est acheminée en utilisant une extrudeuse à vis fonctionnant en continu vers l'unité buse/mandrin et qu'il est superposé au flux de convoyage de la vis un flux de coulée supplémentaire par le mouvement d'un piston rectiligne afin de modifier la vitesse de sortie de la coulée hors de la buse à fente annulaire et d'influer ainsi sur le gonflement de l'ébauche.

7. Procédé selon la revendication 1, **caractérisé en ce qu'**on utilise une unité buse/mandrin comportant au moins un registre déplaçable axialement et réalisé sous forme de manchon, le registre agissant sur un canal d'écoulement parcouru par la coulée et constituant une fente d'étranglement modifiable avant la sortie de la buse et le gonflement de l'ébauche étant influencé en réglant la fente d'étranglement.

8. Procédé selon la revendication 1, **caractérisé en ce qu'**une chambre à vide est appliquée au niveau de l'ébauche pendant l'extrusion de l'ébauche afin d'agrandir le diamètre de l'ébauche.

9. Procédé selon la revendication 1, **caractérisé en ce que** l'ébauche sortant de la buse à fente annulaire est refroidie ou réchauffée par des fluides gazeux, la quantité de gaz et/ou la température du gaz pendant l'extrusion de l'ébauche étant contrôlée et une influence étant en outre alors exercée sur l'allongement de l'ébauche.

10. Procédé selon la revendication 1, **caractérisé en ce qu'**on contrôle en outre un allongement de l'ébauche en modifiant la température de la coulée.
